(19) Europäisches Patentamt
European Patent Office
Office européen des brevets

(11) **EP 4 101 626 A1**

(12) **EUROPEAN PATENT APPLICATION**

(43) Date of publication:
**14.12.2022 Bulletin 2022/50**

(21) Application number: **21305803.5**

(22) Date of filing: **11.06.2021**

(51) International Patent Classification (IPC):
***B29D 11/00*** (2006.01)    ***G02C 7/02*** (2006.01)

(52) Cooperative Patent Classification (CPC):
**B29D 11/00317; B29D 11/00355; B29D 11/00461;
B29D 11/0073; G02C 7/022;** G02C 2202/24

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ESSILOR INTERNATIONAL
94220 Charenton-Le-Pont (FR)**

(72) Inventors:
• **GACOIN, Eric
75011 Paris (FR)**
• **MEYNEN, Mathieu
94000 Créteil (FR)**
• **LECOMPERE, Maxime
94700  Maisons-Alfort (FR)**

(74) Representative: **Cabinet Novitech
188 Grande rue Charles de Gaulle
94130 Nogent-sur-Marne (FR)**

(54) **METHOD FOR OBTAINING A LENS ELEMENT**

(57)    A method for providing a lens element, the method comprising:
- providing at least a lens substrate comprising a first surface and a second surface opposed to the first surface;
- disposing a layer of a curable resin on at least a part of the first surface of the lens substrate;
- locally irradiating a first area of a surface of the lens substrate with a first emitting source for a first duration tl;
- globally irradiating at least part of a surface of the lens substrate with second emitting source.

Fig. 1

**Description**

**TECHNICAL FIELD**

The disclosure relates to a lens element intended to be worn in front of an eye of a wearer and having at least a prescribed refractive power, and to a method, for example implemented by computer means for determining a lens element according to the disclosure.

**BACKGROUND**

Myopia of an eye is characterized by the fact that the eye focuses distant objects in front of its retina. Myopia is usually corrected using a concave lens and hyperopia is usually corrected using a convex lens. Methods of the prior have tried to develop solutions for checking visual acuity without requiring the intervention of an eye-care professional.
Myopia, also referred as to short-sightedness, has become a major public health problem worldwide. Accordingly, a large effort has been made to develop solutions aiming to slow down myopia progression.
Most of the recent management strategies for myopia progression involved acting on the peripheral vision using optical defocus. This approach has received a great deal of interest since works in chicks and primates showed that foveal refractive error could be manipulated through peripheral optical defocus without the involvement of an intact fovea. Several methods and products are used to slow down myopia progression by inducing such peripheral optical defocus. Among these solutions, orthokeratology contact lenses, soft bifocal and progressive contact lenses, circular progressive ophthalmic lenses, and lenses with array of microlenses have been shown to be more or less effective, through randomized controlled trials.
Myopia control solutions with array of microlenses have been proposed, in particular by the applicant. However, optical lenses comprising microlenses are very difficult to manufacture. Usually, such optical lenses are manufactured using specific mold.
However, the utilization of molds to manufacture optical lenses makes it difficult to provide optical lenses optimized or adapted for specific wearers. Indeed, the number of different molds required would be too important to represent an acceptable solution with a demolding, which have to be still consistent molding-by-molding.
Therefore, there is a need for a simple solution to, simply, quickly, and accurately, manufacture optical lenses that can easily be adapted and optimized for a wearer.

**SUMMARY**

To this end, the disclosure proposes a lens element intended to be worn in front of an eye of a wearer, the lens element comprising:

- at least one lens substrate comprising at least a first surface and a second surface intended to face an eye of wearer;
- at least one layer of reticulated resin disposed on at least one surface of the lens substrate;

wherein the at least one lens substrate and the at least one layer of reticulated resin form:

- a refraction area having a refractive power based on a prescription of the wearer; and
- a plurality of at least three optical elements having an optical function of not focusing an image on the retina of the eye of the wearer.

Advantageously, not focusing an image on the retina of the wearer allows creating a control signal that reduces the progression of abnormal refractions of the eye such as myopia or hyperopia.
According to further embodiments which can be considered alone or in combination:

- the refraction area comprises at least a central zone of the lens element; and/or

- the central zone has a characteristic dimension greater than 4 mm and smaller than 20 mm; and/or

- the central zone is centered on a reference point of the lens element; and/or

- the reference point is one of a geometrical center, optical center, near vision point, or far vision point of the lens element; and/or

- the refraction area has a first refractive power based on a prescription for correcting an abnormal refraction of the eye of the wearer and a second refractive power different from the first refractive power; and/or

- the refraction area is formed as the area other than the areas formed by the plurality f optical elements; and/or

- the difference between the first optical power and the second optical power is greater than or equal to 0.5D; and/or

- at least one, for example all of, the optical elements is configured to not focus on the retina of the wearer; and/or

- at least one, for example all of, the optical elements is configured to focus in front of retina of the wearer; and/or

- at least one, for example all of, the optical elements is configured to focus behind of retina of the wearer; and/or

- at least one, for example more than 50%, preferably all, of the optical elements has a spherical optical function in standard wearing conditions; and/or

- at least one, for example more than 50%, preferably all, of the optical elements has a non-spherical optical function in standard wearing conditions; and/or

- at least one, for example more than 50%, preferably all, of the optical elements comprises a cylindrical power; and/or

- at least one, for example more than 50%, preferably all, of the optical elements is a multifocal refractive micro-lens; and/or

- at least one, for example more than 50%, preferably all, of the optical elements is an aspherical microlens; and/or

- at least one, for example more than 50%, preferably all, of the optical elements comprises an aspherical surface, with or without a rotational symmetry; and/or

- at least one, for example more than 50%, preferably all, of the optical elements is a toric refractive microlens; and/or

- the optical elements are configured so that along at least one section of the lens element, the mean sphere of the optical elements increases from a point of said section towards the peripheral part of said section; and/or

- the optical elements are configured so that along at least one section of the lens element, the mean cylinder of optical elements increases from a point of said section towards the peripheral part of said section; and/or

- the optical elements are configured so that along the at least one section of the lens element the mean sphere and/or the mean cylinder of the optical elements increases from the center of said section towards the peripheral part of said section; and/or

- the refraction area comprises an optical center and the optical elements are configured so that along any section passing through the optical center of the lens element, the mean sphere and/or the mean cylinder of the optical elements increases from the optical center towards the peripheral part of the lens element; and/or

- the optical elements are configured so that in standard wearing condition the at least one section is a horizontal section; and/or

- the refraction area comprises a far vision reference point, a near vision reference, and a meridian joining the far and near vision reference points, the optical elements are configured so that in standard wearing conditions along any horizontal section of the lens element the mean sphere and/or the mean cylinder of the optical elements increases from the intersection of said horizontal section with the meridian towards the peripheral part of the lens element; and/or

- the mean sphere and/or the mean cylinder increase function along the sections are different depending on the position of said section along the meridian; and/or

- the mean sphere and/or the mean cylinder increase function along the sections are unsymmetrical; and/or

- the optical elements are configured so that along the at least one section of the lens element the mean sphere and/or the mean cylinder of optical elements increases from a first point of said section towards the peripheral part of said section and decreases from a second point of said section towards the peripheral part of said section, the second point being closer to the peripheral part of said section than the first point; and/or

- the mean sphere and/or the mean cylinder increase function along the at least one section is a Gaussian function; and/or

- the mean sphere and/or the mean cylinder increase function along the at least one section is a Quadratic function; and/or

- at least part, for example all, of the optical elements have a contour shape being inscribable in a circle having a diameter greater than or equal to 0.2 mm, for example greater than or equal to 0.4 mm, for example greater than or equal to 0.6 mm, for example greater than or equal to 0.8 mm and smaller than or equal to 2.0 mm, for example smaller than or equal to 1.0 mm: and/or

- at least one, for example all, of the optical elements are non-contiguous; and/or

- at least one, for example all, of the optical elements are contiguous; and/or

- at least one, for example all, of the optical elements have an annular shape, for example around part of the refraction area; and/or

- at least part, for example all, of the optical elements are located on the front surface of the lens element; and/or

- at least part, for example all, of the optical elements are located on the back surface of the lens element; and/or

- at least part, for example all, of the optical elements are located between the front and the back surfaces of the lens element; and/or

- the lens element comprises an ophthalmic lens bearing the refraction area and a clip-on bearing the plurality of at least three optical elements adapted to be removably attached to the ophthalmic lens when the lens element is worn; and/or

- for every circular zone having a radius comprised between 2 and 4 mm comprising a geometrical center located at a distance of the optical center of the lens element greater or equal to said radius + 5mm, the ratio between the sum of areas of the parts of the optical elements located inside said circular zone and the area of said circular zone is comprised between 20% and 70%; and/or

- the optical elements are positioned on a network, for example a structured mesh; and/or

- the optical elements are positioned on a squared mesh or a hexagonal mesh or a triangle mesh or an octagonal mesh; and/or

- the mesh structure is a random mesh, for example a Voronoi mesh; and/or

- the optical elements are positioned along a plurality of concentric rings; and/or

- the optical elements are organized in at least two groups of optical elements, each group of optical elements is organized in at least two concentric rings having the same center, the concentric ring of each group of optical element is defined by an inner diameter corresponding to the smallest circle that is tangent to at least one optical element of said group and an outer diameter corresponding to the largest circle that is tangent to at least one optical elements of said group; and/or

- at least part of, for example all, the concentric rings of optical elements are centered on the optical center of the surface of the lens element on which said optical elements are disposed; and/or

- the concentric rings of optical elements have a diameter comprised between 9.0 mm and 60 mm; and/or

- the distance between two successive concentric rings of optical elements is greater than or equal to 2.0 mm, for example 3.0 mm, preferably 5.0 mm, the distance between two successive concentric rings being defined by the difference between the inner diameter of a first concentric ring and the outer diameter of a second concentric ring, the second concentric ring being closer to the periphery of the lens element; and/or

- the lens element further comprises optical elements positioned radially between two concentric rings; and/or

The disclosure further relates to a method, for example implemented by computer means, for determining and/or providing a lens element, the method comprising:

- providing at least a lens substrate comprising a first surface and a second surface opposed to the first surface;
- disposing a layer of curable resin on at least a part of the first surface of the lens substrate;
- locally irradiating a first area of a surface of the lens substrate with a first emitting source for a first duration t1;
- globally irradiating at least part of a surface of the lens substrate with second emitting source.

Advantageously, the method according to the disclosure allows providing lens elements comprising areas having different optical properties. Moreover, the manufacturing method does not involve a molding step nor a surfacing step. In other words, the process allows improving in terms of efficiency, cost reduction, and resources required, the process to obtain a lens element.

According to further embodiments of the disclosure which can be considered alone or in combination:

- the layer of a curable resin is applied over the whole first surface of the lens substrate; and/or

- the resin is radical, cationic or anionic chain growth polymerizable; and/or

- the first emitting source produces a light pattern comprising a range of energy levels, said pattern defining on an irradiated portion the first area of the surface of the lens; and/or

- the method further comprises, prior to the local irradiation of the first area, positioning a first mask between the first emitting source and the surface of the lens substrate, the mask defining the first area of the surface of the lens substrate; and/or

- the method comprises prior to the global irradiation of at least part of the surface, removing the first mask; and/or

- the first and second emitting source are identical; and/or

- the first and second emitting source are different; and/or

- after the global irradiation of at least part of the surface, the first area defines a first plurality of at least three elements having a first optical function; and/or

- the at least three elements are contiguous; and/or

- the at least three elements are organized in a plurality of rings; and/or

- the method comprises at least a second step of locally irradiating a second area of a surface of the lens substrate with first emitting source for a second duration t2; and/or

- the method comprises at least a second step of locally irradiating a second area of a surface of the lens substrate with at least a second emitting source for the first duration t1; and/or

- the method comprises prior to the second step of locally irradiating, positioning a second mask between the emitting source and the surface of the lens substrate, the second mask defining the second area of the surface of the lens; and/or

- the method comprises applying a layer of coating at least partially on the part of the first surface of the substrate.

## BRIEF DESCRIPTION OF THE DRAWINGS

Embodiments of the invention will now be described, by way of example only, and with reference to the following drawings in which:

- Figure 1 illustrates a front view of a lens element according to an embodiment of the disclosure;

- Figures 2 illustrates a 3D view of a lens element according to an embodiment of the disclosure;

- Figures 3a to 3C illustrate horizontal sections of different embodiments of the lens element according to the disclosure;

- Figures 4 illustrates a front view of a lens element according to an embodiment of the disclosure;

- Figure 5 illustrates a 3D view of a lens element according to an embodiment of the disclosure; and

- Figure 6 illustrates a chart-flow embodiment of the method for providing a lens element according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

## DETAILED DESCRIPTION

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to a lens element intended to be worn in front of an eye of a person.

In the context of the present invention, the term "lens element" can refer to an uncut optical lens or a spectacle optical lens edged to fit a specific spectacle frame or an ophthalmic lens or an intraocular lens or a contact lens, or an optical device adapted to be positioned on the ophthalmic lens. The optical device may be positioned on the front or back surface of the ophthalmic lens. The optical device may be an optical patch or film. The optical device may be adapted to be removably positioned on the ophthalmic lens for example a clip configured to be clipped on a spectacle frame comprising the ophthalmic lens.

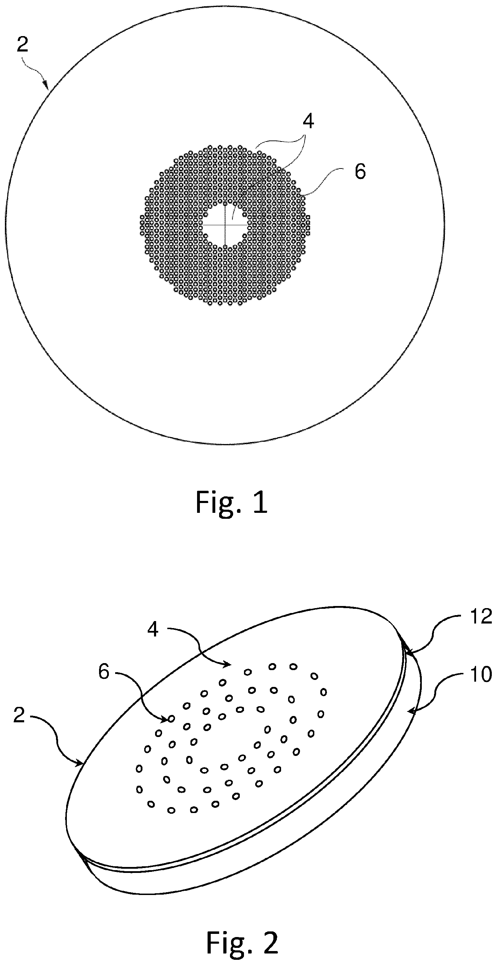

As represented in figures 1 and 2, the lens element 2 according to the disclosure comprises at least one lens substrate 10. The lens substrate comprises at least a first surface and a second surface opposed to the second surface. For example, the first surface may comprise an object side surface formed as a convex curved surface toward an object side and the second surface may comprise an eye side surface formed as a concave surface having a different curvature than the curvature of the object side surface. The lens substrate may be made of organic material, for example polycarbonate, or made of mineral material such as glass.

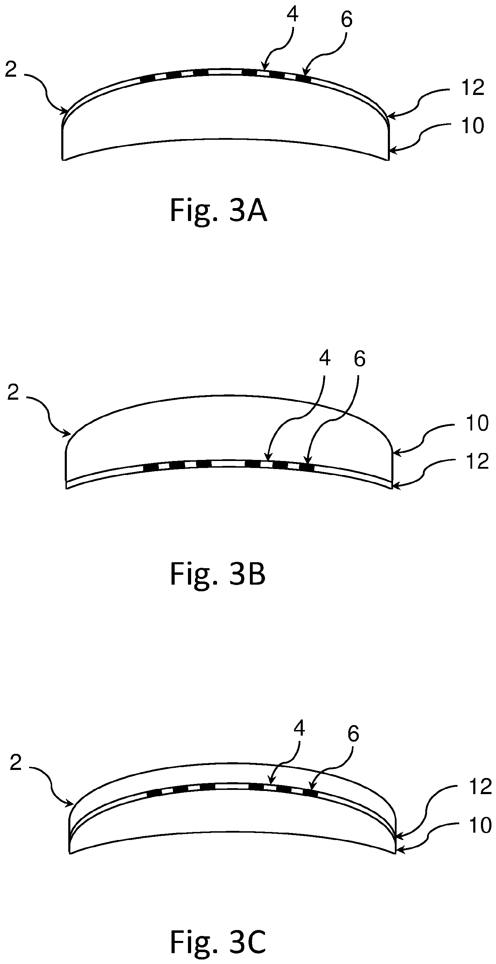

As represented in figures 2 and 3, the lens element 2 may comprise at least one layer of reticulated resin 12. The layer of reticulated resin 12 is disposed on at least one surface of the lens substrate, for example on the first surface and/or second surface. The resin is a radical, anionic and/or cationic chain growth polymerized and/or polymerized via step growth polymerization.

Preferably, the resin is disposed over the entire surface of the lens substrate. However, it may be advantageous to dispose the resin over a part of the surface of the substrate.

As illustrated in figure 3C, the lens element 2 may comprise a second lens substrate. The second lens substrate may be disposed over the first lens substrate 10 to encapsulate the layer of reticulated.

At least one part, preferably all, of a surface of the lens substrate 10 may be covered by at last one layer of coating element. The at least one layer of coating element may be disposed over the layer of reticulated resin 12. The at least one layer coating element may comprise features selected from the group consisting of anti-scratch, anti-reflection, anti-smudge, anti-dust, UV filtration, blue light-filtration, anti-abrasion features.

As illustrated in figures 1 and 2, the at least one lens substrate 10 and the at least one layer of reticulated resin 12 form a refraction area 4 and a plurality of at least three optical elements 6 of the lens element 2.

The refraction area 4 has a refractive power Px based on the prescription of the eye of the person for which the lens element is adapted. The prescription is for example adapted for correcting an abnormal refraction of the eye of the wearer.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

The prescription may comprise an indication that the eye of the wearer has no defect and that no refractive power is to be provided to the wearer. In such case the refractive area is configured so as to not provide any refractive power.

The refraction area is preferably formed as the area other than the areas formed of the plurality of optical elements. In other words, the refraction area is the complementary area to the areas formed of the plurality of optical elements.

As illustrated in figures 1 to 3, the refraction area 4 may comprise at least a central zone of the lens element 2.

The central zone may be centered on a reference point of the lens element 2. The reference point on which the central zone may be centered is either one of a geometrical center and/or an optical and/or a near vision reference point and/or a far vision reference point of the lens element.

Preferably, the central zone is centered on, or at least comprises a framing reference point that faces the pupil of the wearer gazing straight ahead in standard wearing conditions.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

The Cornea to lens distance is the distance along the visual axis of the eye in the primary position (usually taken to be the horizontal) between the cornea and the back surface of the lens; for example equal to 12mm.

The Pupil-cornea distance is the distance along the visual axis of the eye between its pupil and cornea; usually equal to 2mm.

The CRE to pupil distance is the distance along the visual axis of the eye between its center of rotation (CRE) and cornea; for example equal to 11. 5mm.

The CRE to lens distance is the distance along the visual axis of the eye in the primary position (usually taken to be the horizontal) between the CRE of the eye and the back surface of the lens, for example equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example equal to -8°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example equal to 0°.

An example of standard wearing condition may be defined by a pantoscopic angle of - 8°, a Cornea to lens distance of 12 mm, a Pupil-cornea distance of 2 mm, a CRE to pupil distance of 11.5 mm, a CRE to lens distance of 25.5 mm and a wrap angle of 0°.

Preferably, the central zone comprises the optical center of the lens and has a characteristic dimension greater than 4mm - corresponding to +/- 8° peripheral angle on the retina side, and smaller than 22mm corresponding to +/- 44° peripheral angle on the retina side, for example smaller than 20 mm corresponding to +/- 40° peripheral angle on the retina side. The characteristic dimension may be a diameter or the major minor axes of an ellipse shaped central zone.

The refraction area 4 may further comprise at least a second refractive power Pp different from the prescribed refractive power Px. In the sense of the invention, the two refractive powers are considered different when the difference between said refractive powers is greater than or equal to 0.5 D.

When the refractive power Px is prescribed to compensate a myopia of the eye of the wearer, the second refractive power Pp is greater than the refractive power Px.

When the refractive power Px is prescribed to compensate hyperopia of the eye of the wearer, the second refractive power Pp is smaller than the refractive power Px.

The refraction area 4 may comprise a continuous variation of refractive power. For example, the refractive area may have a progressive addition design. The optical design of the refraction area may comprise a fitting cross where the optical power is negative, and a first zone extending in the temporal side of the refractive are when the lens element is being worn by a wearer. In the first zone, the optical power increases when moving towards the temporal side, and over the nasal side of the lens, the optical power of the ophthalmic lens is substantially the same as at the fitting cross. Such optical design is disclosed in greater details in WO2016/107919.

Alternatively, the refractive power in the refraction area 4 may comprise at least one discontinuity.

The plurality of at least three optical element has an optical function of not focusing an image on the retina of the eye of the wearer. In other words, when the wearer wears the lens element, for example in standard wearing conditions, rays of light passing through the plurality of optical elements will not focus on the retina of the eye of the wearer.

Advantageously, not focusing an image on the retina of the wearer allows creating a control signal that suppresses, reduces, or at least slows down the progression of abnormal refractions, such as myopia or hyperopia, of the ye of the person wearing the lens element.

At least one, preferably more than 50%, more preferably all the optical elements 6 may be configured, for example in wearing conditions, to focus other than on the retina of the wearer. In other words, the plurality of optical elements may be configured to focus in front and/or behind the retina of the eye of the wearer.

At least one, for example more than 50%, preferably all, of the optical elements may have a spherical optical function in standard wearing conditions.

At least one, for example more than 50%, preferably all, of the optical elements may have a non-spherical optical function in standard wearing conditions. By "non-spherical optical function", it should be understood as not having a single focus point. For example, rays of light passing through the optical elements having a non-spherical optical function will provide a volume of not focused light.

At least one, for example more than 50%, preferably all, of the optical elements may comprise a cylindrical power.

At least one, for example more than 50%, preferably all, of the optical elements may be a multifocal refractive micro-lens. In the sense of the invention, "multifocal refractive micro-lens" includes bifocals (with two focal powers), trifocals (with three focal powers), progressive addition lenses, with continuously varying focal power, for example aspherical surface lenses.

At least one, for example more than 50%, preferably all, of the optical elements may be an aspherical microlens. In the sense of the invention, aspherical microlenses have a continuous power evolution over their surface, for example from a geometrical or optical center to the periphery of the microlens.

An aspherical microlens may have an asphericity comprised between 0.1D and 3D. The asphericity of an aspherical microlens corresponds to the ratio of optical power measured in the center of the microlens and the optical power measured in the periphery of the microlens. The center of the microlens may be defined by a spherical area centered on the geometrical center of the microlens and having a diameter comprised between 0.1 mm and 0.5 mm, preferably equal to 2.0 mm. The periphery of the microlens may be defined by an annular zone centered on the geometrical center of the microlens and having an inner diameter comprised between 0.5 mm and 0.7 mm and an outer diameter comprised between 0.70 mm and 0.80 mm. According to an embodiment of the invention, the aspherical microlenses have an optical power in their geometrical center comprised between 2.0D and 7.0D in absolute value, and an optical power in their periphery comprised between 1.5D and 6.0D in absolute value.

At least one, for example more than 50%, preferably all, of the optical elements may comprise an aspherical surface, with or without a rotational symmetry.

At least one, for example more than 50%, preferably all, of the optical elements may comprise a toric surface. A toric surface is a surface of revolution that can be created by rotating a circle or arc about an axis of revolution (eventually positioned at infinity) that does not pass through its center of curvature. Toric surface lenses have two different radial profiles at right angles to each other, therefore producing two different focal powers. Toric and spheric surface components of toric lenses produce an astigmatic light beam, as opposed to a single point focus.

At least one, for example more than 50%, preferably all, of the optical elements has discontinuities, such as a discontinuous surface, for example Fresnel surfaces and/or having a refractive index profile with discontinuities.

The optical elements may be configured so that along at least one section of the lens element, the mean sphere of the optical elements varies, for example increases or decreases, from a point of said section towards the peripheral part of said section.

As is known, a minimum curvature $CURV_{min}$ is defined at any point on an aspherical surface by the formula:

$$CURV_{min} = \frac{1}{R_{max}}$$

where $R_{max}$ is the local maximum radius of curvature, expressed in meters and $CURV_{min}$ is expressed in diopters.

Similarly, a maximum curvature $CURV_{max}$ can be defined at any point on an aspheric surface by the formula:

$$CURV_{max} = \frac{1}{R_{min}}$$

where $R_{min}$ is the local minimum radius of curvature, expressed in meters and $CURV_{max}$ is expressed in diopters.

It can be noticed that when the surface is locally spherical, the local minimum radius of curvature $R_{min}$ and the local maximum radius of curvature $R_{max}$ are the same and, accordingly, the minimum and maximum curvatures $CURV_{min}$ and $CURV_{max}$ are also identical. When the surface is aspherical, the local minimum radius of curvature $R_{min}$ and the local maximum radius of curvature $R_{max}$ are different.

From these expressions of the minimum and maximum curvatures $CURV_{min}$ and $CURV_{max}$, the minimum and

maximum spheres labelled SPHmin and SPH$_{max}$ can be deduced according to the kind of surface considered.

When the surface considered is the object side surface (also referred to as the front surface), the expressions are the following:

$$SPH_{min} = (n-1)*CURV_{min} = \frac{n-1}{R_{max}} , \text{ and } SPH_{min} = (n-1)*CURV_{min} = \frac{n-1}{R_{max}}$$

where n is the index of the constituent material of the lens.

If the surface considered is an eyeball side surface (also referred to as the back surface), the expressions are the following:

$$SPH_{min} = (1-n)*CURV_{min} = \frac{1-n}{R_{max}} \text{ and } SPH_{max} = (1-n)*CURV_{max} = \frac{1-n}{R_{min}}$$

where n is the index of the constituent material of the lens.

As is well known, a mean sphere SPHmean at any point on an aspherical surface can also be defined by the formula:

$$SPH_{mean} = \frac{1}{2}(SPH_{min} + SPH_{max})$$

The expression of the mean sphere therefore depends on the surface considered:

if the surface is the object side surface, $SPH_{mean} = \frac{n-1}{2}\left(\frac{1}{R_{min}} + \frac{1}{R_{max}}\right)$ if the surface is an eyeball side surface,

$$SPH_{mean} = \frac{1-n}{2}\left(\frac{1}{R_{min}} + \frac{1}{R_{max}}\right)$$

A cylinder CYL is also defined by the formula:

$$CYL = |SPH_{max} - SPH_{min}|.$$

The optical elements may be configured so that along at least one section of the lens element, the mean cylinder of the optical elements varies, for example increases or decreases, from a point of said section towards the peripheral part of said section.

Varying the mean sphere and/or mean cylinder of the optical elements along a section of the lens element allows varying the defocus and by extension the intensity of the myopia control signal which lead to a better control of the progression of the abnormal refraction of the eye.

The optical elements may be configured so that along the at least one section of the lens element the mean sphere and/or the mean cylinder of the optical elements increases from the center of said section towards the peripheral part of said section.

The optical elements may be configured so that, in standard wearing conditions, the at least one section is a horizontal section.

The refraction area 4 may comprise an optical center and the optical elements 6 may be configured so that along any section passing through the optical center of the lens element, the mean sphere and/or the mean cylinder of the optical elements increases from the optical center towards the peripheral part of the lens element.

The refraction area 4 may comprise a far vision reference point, a near vision reference, and a meridian joining the far and near vision reference points, and the optical elements 6 may be configured so that in standard wearing conditions along any horizontal section of the lens element the mean sphere and/or the mean cylinder of the optical elements increases from the intersection of said horizontal section with the meridian towards the peripheral part of the lens element.

The mean sphere and/or the mean cylinder increase function along the sections may be different depending on the position of said section along the meridian.

The mean sphere and/or the mean cylinder increase function along the sections may be unsymmetrical.

The optical elements may be configured so that along the at least one section of the lens element the mean sphere and/or the mean cylinder of optical elements increases from a first point of said section towards the peripheral part of said section and decreases from a second point of said section towards the peripheral part of said section, the second point being closer to the peripheral part of said section than the first point.

Advantageously, it allows improving the slowdown of the progression of the abnormal refraction of the eye of the wearer.

The mean sphere and/or the mean cylinder increase function along the at least one section may be a Gaussian function or a Quadratic function.

At least part, for example more than 50%, preferably all, of the optical elements 6 may microlenses having a contour shape being inscribable in a circle having a diameter greater than or equal to 0.2 mm, for example greater than or equal to 0.4 mm, for example greater than or equal to 0.6 mm, for example greater than or equal to 0.8 mm and smaller than or equal to 5.0 mm, preferably smaller than or equal to 3.0 mm, more preferably smaller than or equal to 2.0 mm, for example smaller than or equal to 1.0 mm.

As represented in figure 1, at least one, for example all, of the optical elements may be non-contiguous.

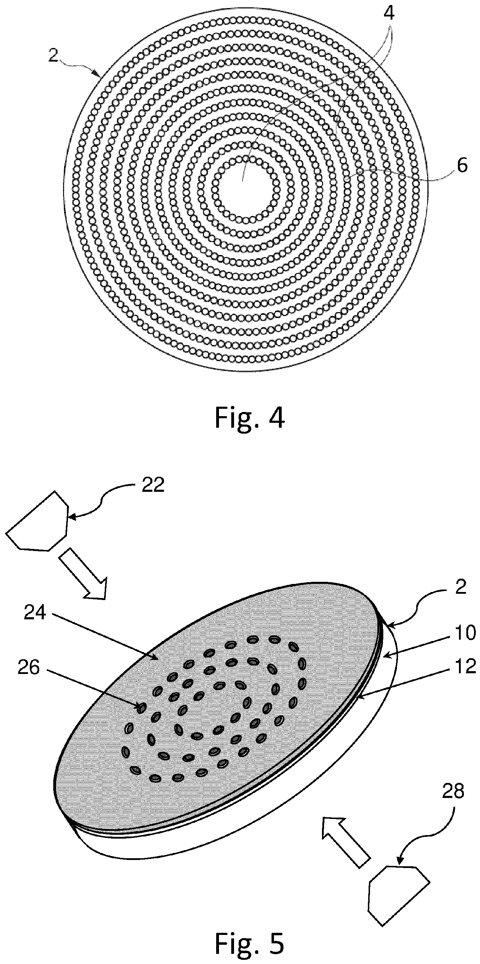

As represented in figure 4, at least one, preferably all, of the optical elements are contiguous.

In the sense of the disclosure, two optical elements located on a surface of the lens substrate are contiguous if there is a path supported by said surface that links the two optical elements and if along said path one does not reach the basis surface on which the optical elements are located.

When the surface on which the at least two optical elements are located is spherical, the basis surface corresponds to said spherical surface. In other words, two optical elements located on a spherical surface are contiguous if there is a path supported by said spherical surface and linking them and if along said path one may not reach the spherical surface.

When the surface on which the at least two optical elements are located is non-spherical, the basis surface corresponds to the local spherical surface that best fit said non-spherical surface. In other words, two optical elements located on a non-spherical surface are contiguous if there is a path supported by said non-spherical surface and linking them and if along said path one may not reach the spherical surface that best fit the non-spherical surface.

Advantageously, having contiguous optical elements helps improving the aesthetic of the lens element and is easier to manufacture.

At least one, for example all, of the optical elements have an annular shape, for example around part of the refraction area. Advantageously, it provides a good repartition of the refraction area and optical elements thereby allowing to provide a better correction of the abnormal refraction of the eye of the wearer while maintaining the effective function of the optical elements to reduce, or at least slow down, the progression of said abnormal refraction.

At least part, for example all, of the optical elements are located on the front surface of the lens element. The front surface of the lens element corresponds to the object side of the lens element facing towards the object.

At least part, for example all, of the optical elements are located on the back surface of the lens element. The back surface of the lens element corresponds to the eye side of the lens element facing towards the eye.

At least part, for example all, of the optical elements are located between the front and the back surfaces of the lens element, for example when the layer of reticulated resin is encapsulated between two lens substrates. Advantageously, it provides a better protection to the optical elements.

Alternatively, the lens element may comprise an ophthalmic lens bearing the refraction area and a clip-on bearing the plurality of at least three optical elements and adapted to be removably attached to the ophthalmic lens when the lens element is worn. Advantageously, it allows managing when the function of slowing down the abnormal refraction of the eye should be present.

For every circular zone having a radius comprised between 2 and 4 mm comprising a geometrical center located at a distance of the optical center of the lens element greater or equal to said radius + 5mm, the ratio between the sum of areas of the parts of the optical elements located inside said circular zone and the area of said circular zone is comprised between 20% and 70%.

The optical elements may be randomly disturbed on the lens element. Alternatively, the optical elements are positioned on the lens element on a network, for example a structured mesh. The structured mesh may be a squared mesh or a hexagonal mesh or a triangle mesh or an octagonal mesh. Alternatively, the mesh structure may be a random mesh, for example a Voronoi mesh.

As illustrated in figures 2 and 4, the optical elements may be organized along a plurality of concentric rings. The concentric rings of optical elements may be annular rings.

In particular, the optical elements may be organized in at least two groups of optical elements, each group of optical elements being organized in at least two concentric rings having the same center. The concentric ring of each group of optical elements is defined by an inner diameter and an outer diameter.

The inner diameter of a concentric ring of each group of optical elements corresponds to the smallest circle that is tangent to at least one optical element of said group of optical elements. The outer diameter of a concentric ring of optical element corresponds to the largest circle that is tangent to at least one optical element of said group.

For example, the lens element may comprise n rings of optical elements, $f_{inner\ 1}$ referring to the inner diameter of the concentric ring which is the closest to the optical center of the lens element, $f_{outer\ 1}$ referring to the outer diameter of the concentric ring which is the closest to the optical center of the lens element.

The distance Di between two successive concentric rings of optical elements i and i+1 may be expressed as:

$$D_i = |\ f_{inner\ i+1} - f_{outer\ i}|,$$

wherein $f_{outer\ i}$ refers to the outer diameter of a first ring of optical elements i and $f_{inner\ i+1}$ refers to the inner diameter of a second ring of optical elements i+1 that is successive to the first one and closer to the periphery of the lens element.

The optical elements may be organized in concentric rings centered on the optical center of the surface of the lens element. In other words, the optical center of the lens element and the center of the concentric rings of optical elements may coincide. For example, the geometrical center of the lens element, the optical center of the lens element, and the center of the concentric rings of optical elements coincide. In the sense of the disclosure, the term coincide should be understood as being really close together, for example distanced by less than 1.0 mm.

The distance $D_i$ between two successive concentric rings may vary according to i. For example, the distance Di between two successive concentric rings may vary between 1.0 mm and 5.0 mm.

The distance $D_i$ between two successive concentric rings of optical elements may be greater than 1.00 mm, preferably 2.0 mm, more preferably 4.0 mm, even more preferably 5.0 mm, for example greater than or equal to 8.0 mm. Advantageously, having the distance Di between two successive concentric rings of optical elements greater than 1.00 mm allows managing a larger refraction area between these rings of optical elements and thus provides better visual acuity.

According to an embodiment of the disclosure, the distances Di between two successive concentric rings i and i+1 may increase when i increases towards the periphery of the lens element.

The concentric rings of optical elements may have a diameter comprised between 9 mm and 60 mm.

The lens element may comprise optical elements disposed in at least two concentric rings, preferably more than 5, more preferably more than 10 concentric rings. For example, the optical elements may be disposed in 11 concentric rings centered on the optical center of the lens.

The diameter di of all optical elements on a concentric ring of the lens element may be identical. For example, all the optical elements on the lens element have an identical diameter.

The optical elements may be configured so that along at least one section of the lens the size or diameter of the optical elements varies, for example increases or decreases, from a point of said section towards the peripheral part of said section.

The optical elements may be configured so that the size or diameter of the optical elements increases from a first point of said section of the lens element towards the peripheral part of said section and decrease from a second point of said section towards the peripheral part of said section, the second point being closer to the peripheral part of said section than the first point.

The lens element may further comprise optical elements positioned radially between two concentric rings.

The disclosure further relates to a method, for example implemented by computer means, for determining and/or providing a lens element.

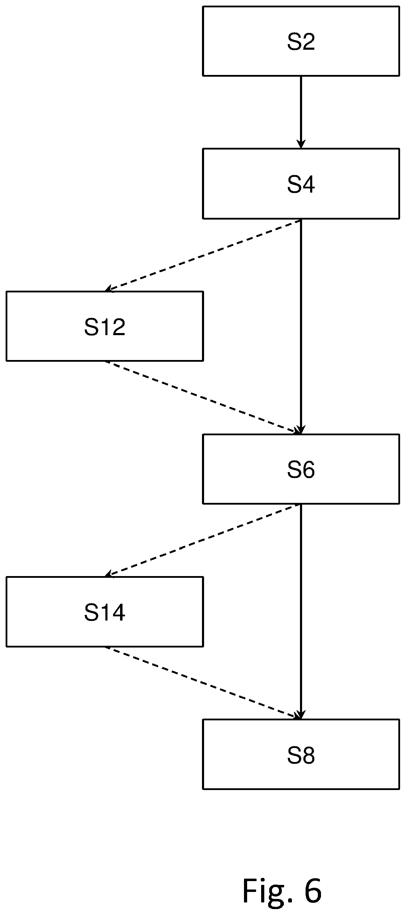

As illustrated in figure 6, the method comprises a step S2 during which at least a lens substrate 10 is provided. The lens substrate 10 comprises a first surface and a second surface opposed to the first surface.

The method further comprises a step S4 during which a layer of curable resin 12 is applied on at least a part of the first surface of the lens substrate 10 and/or at least a part of the second surface of the lens substrate 10. Preferably, the layer of resin is applied over a whole surface of the lens substrate 10. The layer of curable resin 12 may be applied using spin coating methods and/or dip coating methods and/or spray coating methods and/or molded coating methods and/or inkjet methods.

The resin is a radical cationic and/or anionic chain growth polymerizable and/or polymerized via step growth polymerization. For example, the resin may be a light curable glue.

The thickness of the at least one layer of reticulated resin 12 depends on the material composing the resin. Moreover, the thickness of the at least one layer of reticulated resin 12 may depend on the size and/or targeted optical function of the optical elements of the lens element. The thickness of the layer of curable resin 12 is comprised between 0.5 $\mu$m and 300 $\mu$m. For example, the thickness of the layer of curable resin 12 is greater than or equal to 5.0 $\mu$m,

preferably 10.0 μm, more preferably 20 μm, even more preferably 50 μm, 100 μm or 150 μm. For example, the thickness of the layer of curable resin 12 is smaller than or equal to 300 μm, preferably 250 μm, more preferably 200 μm, even more preferably 150 μm.

The method further comprises a step S6 of locally irradiating a first area of a surface of the lens substrate 10. For example, the first surface and/or the second surface of the lens substrate is locally irradiated. Considering that the lens substrate 10 is transparent, a layer of curable resin disposed on the first surface of the lens substrate 10 can be irradiated through said lens substrate with an emitting source facing the second surface.

When irradiated, the molecules of the curable resin polymerize into a network of molecules' chains. Advantageously, the polymerized resin has an index of refraction different from the non-polymerized curable resin. Irradiating the first area of the lens substrate 10 allows forming structures having a different optical power on the lens substrate, such as for example optical elements 6.

As illustrated in figure in figure 6, the first area is locally irradiated with a first emitting source 22. The first emitting source 22 may be a light source, for example an infrared light source or an Ultraviolet light source. Alternatively, the first emitting source may be a radiative source or an electron source. The first emitting source may comprise a range of different energy levels that may vary during irradiation.

The first emitting source 22 may be a punctual source moving over the first area at a high speed. Specific patterns may be used to define different structures of irradiated first area on the lens substrate. Advantageously, irradiating specific area of the lens substrate allows generating specific structured network of optical elements in the layer of curable resin.

The first area of the lens substrate is irradiated during a first duration t1. The first duration t1 may be comprised between 0.1 seconds and 30 minutes. For example, the first duration t1 may be greater than or equal to 1 minute, preferably 5 minutes, more preferably 10 minutes, even more preferably 30 minutes.

The method may comprise prior to the local irradiation step S4, a step S12 of positioning a first mask 24 between the first emitting source 22 and the surface of the lens substrate 10. The first mask may be directly positioned over the surface of the lens substrate or over the layer of curable resin. Alternatively, the first mask may be positioned in contact with the emitting source. Alternatively, the first mask may be maintained between the first emitting source 22 and the surface of the lens substrate 10.

The first mask 24 may be a rigid or flexible structure comprising at least one aperture 26. The apertures 26 of the first mask 24 define the first area of the lens substrate 10 irradiated by the emitting source 22.

Preferably, the first mask 24 is an opaque structure that blocks the transmission of the rays emitted by the emitting source 22.

Advantageously, the utilization of a mask protects the area of the lens substrate that should not be irradiated during the local irradiation step S6. As such, a static light source irradiating a large area may be used during the local irradiation step, thereby facilitating the process.

As illustrated in figure 6, the method further comprises a step S8 of globally irradiating at least part of a surface of the lens substrate. For example, the first surface and/or the second surface of the lens substrate is globally irradiated. Preferably, both the first area and at least part of the area other than the first is irradiated during the global irradiation step S8. For example, an entire surface of the lens substrate 10 is globally irradiated.

The first area has polymerized to a first level of polymerization during the local irradiation step S2. Irradiating said polymerized first area a second time during the global irradiation will increase the polymerization of the molecules of the curable resin to a second level of polymerization. On the contrary, the molecules of the curable resin in the area other than the first area have not been polymerized during the local irradiation step S2. Consequently, when both the first area and the area other than the first area is globally irradiated the molecules of the curable resin in both of those areas will not reach the same level of polymerization.

The inventors have discovered a correlation between the level of polymerization of the curable layer and the optical properties of said resin. In other words, two areas of the curable resin having different level of polymerization or polymerized following different curing kinetics will have different optical characteristics.

Advantageously, the method allows obtaining a lens element with areas having different optical characteristics, such as different optical powers or areas with optical discontinuities. For example, the method allows obtaining a lens element 2 comprising a first refraction area 4 having a refractive power Px based on a prescription and a plurality of optical elements having an optical function of not focusing on the retina of the wearer.

After the global irradiation step S8, the first area defines on the lens element 2 a plurality of at least three optical elements 6 having a first optical function, for example of not focusing on the retina of the wearer.

The first area may define a plurality of at least three optical elements 6 organized in a plurality of concentric rings, for example centered on the geometrical or optical center of the lens element.

As illustrated in figure in figure 5, the first area is locally irradiated with a second emitting source 28. The second emitting source 28 may be a light source, for example an infrared light source or an Ultraviolet light source. Alternatively, the second emitting source may be a radiative source or an electron source. The second emitting source may comprise a range of different energy levels that may vary during irradiation.

The first emitting source 22 may be a punctual source moving over at least part of a second surface, for example over the first area and at least part of the area other than the first area at a high speed.

The first emitting source 22 and the second emitting source 28 may be the same emitting source. Alternatively, the first and second emitting source may be different sources, for example having different properties.

As illustrated in figure 6, the method may further comprise prior to the global irradiation step S8, a step S14 of removing the first mask 24.

When the first mask 24 is removed, both surfaces of the lens substrate may be irradiated during the global irradiation step S8. On the contrary, when the first mask 24 is maintained on a surface of the lens substrate, or on the layer of curable resin disposed on a surface of the lens substrate, the second emitting source 28 must irradiated the surface opposed to the former surface in order to irradiate both the first area and at least a part of the area other than the first area.

The method may further comprise at least second step of locally irradiating a second area of a surface of the lens substrate 10. The second local irradiation may be similar to the first local irradiation.

The second area may be irradiated prior to the first local irradiation, after the first local irradiation, or after the global irradiation.

The second area may be irradiated with the first emitting source. Alternatively, the second area may be irradiated with a different emitting source. For example, the second area may be locally irradiated with a different emitting source than the first emitting source for the duration t1. Alternatively, the second area may be irradiated with the first emitting source for a second duration t2. The second duration t2 may be comprised between 0.1 seconds and 2 minutes, for example 2 seconds, preferably 10, more preferably 60, even more preferably 100 seconds.

The method may further comprise prior to the second local irradiation, a second step of positioning a second mask between the emitting source and the surface of the lens substrate. The second mask may be directly positioned over the surface of the lens substrate or over the layer of curable resin. Alternatively, the second mask may be positioned in contact with the emitting source.

Similar to the first mask 24, the second mask may be a rigid or flexible structure comprising at least one aperture. The apertures of the second mask define the second area on the lens substrate 10 irradiated during the second local irradiation. Preferably, the second mask is also an opaque structure that blocks the transmission of the rays emitted by an emitting source.

For example, the second mask comprises apertures disposed in an identical organization that the apertures 26 on the first mask 24, but with a smaller size than the apertures 26. In other words, the first areas defined by the first mask comprises the second areas defined by the second mask. After a first and second irradiations, the curable resin forming the optical elements 6 present two different levels of polymerization. As such, the optical elements 6 may have a first optical power in their center and a second optical power, for example lower than the first optical power, in their periphery.

The method may further comprise, for example after the global irradiation, applying at least a layer of coating over at least a part of the first surface of the lens substrate. For example, the at least one layer of coating element may be disposed over the layer of reticulated resin 12 or over at least a surface of the lens substrate 10.

The at least one layer coating element may comprise features selected from the group consisting of anti-scratch, anti-reflection, anti-smudge, anti-dust, UV filtration, blue light-filtration, anti-abrasion features.

The disclosure relates to a computer program product comprising one or more stored sequences of instructions that are accessible to a processor and which, when executed by the processor, causes the processor to carry out the steps of a method according to the disclosure.

The disclosure further relates to a computer readable medium carrying one or more sequences of instructions of the computer program product according to the disclosure.

Furthermore, the disclosure relates to a program which makes a computer execute a method of the disclosure.

The disclosure also relates to a computer-readable storage medium having a program recorded thereon; where the program makes the computer execute a method of the disclosure.

The disclosure further relates to a device comprising a processor adapted to store one or more sequence of instructions and to carry out at least one of the steps of a method according to the disclosure.

The disclosure further relates to a non-transitory program storage device, readable by a computer, tangibly embodying a program of instructions executable by the computer to perform a method of the present disclosure.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

**Claims**

1. Method for providing a lens element, the method comprising:

   - providing at least a lens substrate comprising a first surface and a second surface opposed to the first surface;
   - disposing a layer of a curable resin on at least a part of the first surface of the lens substrate;
   - locally irradiating a first area of a surface of the lens substrate with a first emitting source for a first duration t1;
   - globally irradiating at least part of a surface of the lens substrate with second emitting source.

2. The method according to claim 1, wherein the first emitting source produces a light pattern comprising a range of energy levels, said pattern defining on an irradiated portion the first area of the surface of the lens.

3. The method according to any of claim 1 or 2, further comprising, prior to the local irradiation of the first area, positioning a first mask between the first emitting source and the surface of the lens substrate, the mask defining the first area of the surface of the lens substrate.

4. The method according to claim 3, further comprising prior to the global irradiation of at least part of the surface, removing the first mask.

5. The method according to any of the preceding claims, wherein the first and second emitting source are identical.

6. The method according to any of claims 1 to 5, wherein after the global irradiation of at least part of the surface, the first area defines a first plurality of at least three elements having a first optical function.

7. The method according to claim 6, wherein the at least three elements are organized in a plurality of rings.

8. The method according to any of claims 1 to 7, further comprising at least a second step of locally irradiating a second area of a surface of the lens substrate with first emitting source for a second duration t2.

9. The method according to any of claims 1 to 7, further comprising at least a second step of locally irradiating a second area of a surface of the lens substrate with at least a second emitting source for the first duration t1.

10. The method according to any of claims 8 and 9, further comprising prior to the second step of locally irradiating, positioning a second mask between the emitting source and the surface of the lens substrate, the second mask defining the second area of the surface of the lens.

11. A lens element intended to be worn in front of an eye of a wearer, the lens element comprising:

- at least one lens substrate comprising at least a first surface and a second surface intended to face the eye of the wearer;
- at least one layer of reticulated resin disposed on at least one surface of the lens substrate, wherein the at least one lens substrate and the at least one layer of reticulated resin form:
- a refraction area having a refractive power based on a prescription of the wearer;
- a plurality of at least three optical elements having an optical function of not focusing an image on the retina of the eye of the wearer.

12. The lens element according to claim 11, wherein the optical elements are positioned along a plurality of concentric rings.

13. The lens element according to any of claims 11 or 12, wherein at least one, for example more than 50% of optical elements have a non-spherical optical function.

14. The lens element according to any of claims 11 or 13, wherein at least one, for example more than 50% of optical elements are aspherical microlenses.

15. The lens element according to any of claims 11 to 14, wherein the optical elements are configured so that along at least one section of the lens the mean sphere of optical elements varies from a point of said section towards the peripheral part of said section.

Fig. 1

Fig. 2

Fig. 3A

Fig. 3B

Fig. 3C

Fig. 4

Fig. 5

```
          ┌──────────────┐
          │      S2      │
          └──────┬───────┘
                 │
                 ▼
          ┌──────────────┐
          │      S4      │
          └──────┬───────┘
        ┌────────┤
        ▼        │
┌──────────────┐ │
│     S12      │ │
└──────┬───────┘ │
       │         ▼
       └──►┌──────────────┐
           │      S6      │
           └──────┬───────┘
        ┌─────────┤
        ▼         │
┌──────────────┐  │
│     S14      │  │
└──────┬───────┘  │
       │          ▼
       └──►┌──────────────┐
           │      S8      │
           └──────────────┘
```

Fig. 6

## EUROPEAN SEARCH REPORT

**Application Number**

EP 21 30 5803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2008/198325 A1 (BONNIN THIERRY [FR] ET AL) 21 August 2008 (2008-08-21)<br>* abstract *<br>* figures 1a-5 *<br>* paragraphs [0019], [0021], [0027], [0048] – [0058] *<br>----- | 1,2,5,6,<br>8,9<br>7<br>3,4,<br>10-15 | INV.<br>B29D11/00<br>G02C7/02 |
| X<br><br>A | US 2009/174098 A1 (ROUAULT DE COLIGNY PIERRE [FR] ET AL)<br>9 July 2009 (2009-07-09)<br>* abstract *<br>* figures 1-7b *<br>* paragraphs [0001], [0005], [0007] – [0016], [0063] – [0068], [0071], [0089] – [0096] *<br>----- | 1-6,8-10<br><br>7,11-15 | |
| A | JP S59 204519 A (NIPPON SHEET GLASS CO LTD) 19 November 1984 (1984-11-19)<br>* abstract *<br>* figures 1-4 *<br>----- | 1-15 | |
| X<br>Y<br>A | WO 2020/180817 A1 (SIGHTGLASS VISION INC [US]) 10 September 2020 (2020-09-10)<br>* abstract *<br>* page 12, line 11 – page 13, line 26 *<br>* page 15, lines 16-27 *<br>* page 18, lines 18-30 *<br>* pages 22-23 *<br>* page 32, line 18 – page 33, line 7 *<br>* figures 1-15 *<br>----- | 11,12<br>13-15<br>1-10 | TECHNICAL FIELDS SEARCHED (IPC)<br>B29D<br>G02C |
| X<br><br>A | WO 2020/078964 A1 (ESSILOR INT [FR])<br>23 April 2020 (2020-04-23)<br>* abstract *<br>* figures 1-10b *<br>* paragraphs [0078] – [0080], [0140] – [0151], [0165] – [0170] *<br>----- | 11<br><br>1-10,<br>12-15 | |

-/--

The present search report has been drawn up for all claims

| Place of search | Date of completion of the search | Examiner |
|---|---|---|
| The Hague | 8 February 2022 | Heckmann, Paul |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/048690 A1 (GUILLOT MATTHIEU [FR] ET AL) 18 February 2021 (2021-02-18) | 7,13-15 | |
| A | * abstract *<br>* paragraphs [0125] – [0133], [0254] – [0261]; figures 1,2 * | 1-6,8-12 | |

TECHNICAL FIELDS
SEARCHED     (IPC)

The present search report has been drawn up for all claims

| Place of search | Date of completion of the search | Examiner |
|---|---|---|
| The Hague | 8 February 2022 | Heckmann, Paul |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 101 626 A1

Europäisches
Patentamt

European
Patent Office

Office européen
des brevets

**Application Number**

**EP 21 30 5803**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

**Application Number**

EP 21 30 5803

The Search Division considers that the present European patent application does not comply with the requirements of unity of invention and relates to several inventions or groups of inventions, namely:

        1. claims: 1-6, 8-10

            Method for providing a lens element comprising positioning a
            first mask between the first emitting source and the surface
            of the lens substrate, the mask defining the first area of
            the surface of the lens substrate.
                                ---

        2. claims: 7, 11-15

            Method for providing a lens element comprising at least
            three elements that are organized in a plurality of rings
            (claim 7) or a plurality of at least three optical elements
            having an optical function of not focusing an image on the
            retina of the eye of the wearer (claim 11).
                                ---

## ANNEX TO THE EUROPEAN SEARCH REPORT
## ON EUROPEAN PATENT APPLICATION NO.

EP 21 30 5803

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2022

| Patent document cited in search report | | Publication date | Patent family member(s) | | Publication date |
|---|---|---|---|---|---|
| US 2008198325 | A1 | 21-08-2008 | AU | 2006238511 A1 | 26-10-2006 |
| | | | CA | 2604929 A1 | 26-10-2006 |
| | | | CN | 101164008 A | 16-04-2008 |
| | | | EP | 1875303 A1 | 09-01-2008 |
| | | | FR | 2884622 A1 | 20-10-2006 |
| | | | JP | 2008537177 A | 11-09-2008 |
| | | | KR | 20080000663 A | 02-01-2008 |
| | | | US | 2008198325 A1 | 21-08-2008 |
| | | | WO | 2006111652 A1 | 26-10-2006 |
| US 2009174098 | A1 | 09-07-2009 | AT | 500956 T | 15-03-2011 |
| | | | EP | 2067612 A1 | 10-06-2009 |
| | | | US | 2009174098 A1 | 09-07-2009 |
| JP S59204519 | A | 19-11-1984 | JP | H0233296 B2 | 26-07-1990 |
| | | | JP | S59204519 A | 19-11-1984 |
| WO 2020180817 | A1 | 10-09-2020 | CN | 113661434 A | 16-11-2021 |
| | | | EP | 3931626 A1 | 05-01-2022 |
| | | | WO | 2020180817 A1 | 10-09-2020 |
| WO 2020078964 | A1 | 23-04-2020 | BR | 112021005132 A2 | 15-06-2021 |
| | | | CN | 112888973 A | 01-06-2021 |
| | | | EP | 3867672 A1 | 25-08-2021 |
| | | | US | 2021356763 A1 | 18-11-2021 |
| | | | WO | 2020078964 A1 | 23-04-2020 |
| US 2021048690 | A1 | 18-02-2021 | NONE | | |

EPO FORM P0459

For more details about this annex : see Official Journal of the European Patent Office, No. 12/82